# EUROPÄISCHE PATENTSCHRIFT

(11) **EP 3 756 311 B1**
(45) Veröffentlichungstag und Bekanntmachung des Hinweises auf die Patenterteilung: **06.04.2022**
(21) Anmeldenummer: 19707739.9
(22) Anmeldetag: 20.02.2019
(51) Int. Cl.: H04L 12/40

(54) **VORRICHTUNG UND VERFAHREN FÜR EINE SENDE-/EMPFANGSEINRICHTUNG EINES BUSSYSTEMS**
APPARATUS AND METHOD FOR A TRANSMITTING/RECEIVING DEVICE OF A BUS SYSTEM
DISPOSITIF ET PROCÉDÉ DESTINÉS À UN MOYEN ÉMETTEUR-RÉCEPTEUR D'UN SYSTÈME DE BUS

(30) Priorität: 21.02.2018 DE 102018202614
(43) Veröffentlichungstag der Anmeldung: 30.12.2020
(73) Patentinhaber: Robert Bosch GmbH, 70442 Stuttgart (DE)
(72) Erfinder: MUTTER, Arthur, 73765 Neuhausen (DE)
(86) Internationale Anmeldenummer: PCT/EP2019/054148
(87) Internationale Veröffentlichungsnummer: WO 2019/162292

(56) Entgegenhaltungen:
- EP-A1- 3 214 803
- JP-A- 2017 050 839
- US-A1- 2014 156 893

## Beschreibung

Die vorliegende Erfindung betrifft eine Vorrichtung und ein Verfahren für eine Sende-/Empfangseinrichtung eines Bussystems. Die Vorrichtung und das Verfahren sind derart ausgestaltet, dass eine Einschaltdauer für eine Funktion dynamisch anpassbar ist, mit welcher eine Reduzierung der Schwingneigung beim Übergang zwischen unterschiedlichen Bitzuständen eines Bussignals erzielbar ist.

### Stand der Technik

Bei einer Nachrichten- oder Datenübertragung in einem Bussystem werden Informationen, die in Bytes bzw. Bits der Nachrichten oder Daten enthalten sind, durch unterschiedliche Bitzustände oder Spannungszustände dargestellt. Die unterschiedlichen Bitzustände haben beim Übertragen der Nachricht über einen Bus des Bussystems unterschiedliche Buszustände zur Folge. Je nach Bussystem existieren für Nachrichten- oder Datenübertragung verschiedene Übertragungsprotokolle.

Beispielsweise werden beim CAN-Bussystem Nachrichten mittels des CAN- und/oder CAN FD Protokolls übertragen, wie es im Standard ISO-11898-1:2015 als CAN Protokoll-Spezifikation mit CAN FD beschrieben ist. Das CAN-Bussystem ist heute für die Kommunikation zwischen Sensoren und Steuergeräten weit verbreitet. Oft wird das CAN-Bussystem in Fahrzeugen oder Automatisierungsanlagen, usw. für eine Kommunikation zwischen den einzelnen Busteilnehmern eingesetzt.

Insbesondere bei der CAN/CAN-FD-Kommunikation müssen die Sende-/Empfangseinrichtungen, die auch Transceiver genannt werden, in der Lage sein, den Bus niederohmig zu treiben, um einen dominanten Buszustand oder Bitzustand als einen der beiden verschiedenen Buszustände oder Bitzustände herzustellen. Im Rezessivzustand als dem anderen der beiden verschiedenen Buszustände dagegen sind die Sende-/Empfangseinrichtungen verhältnismäßig hochohmig.

Der Übergang von Dominant nach Rezessiv ist je nach Bustopologie, Länge der Stubs bzw. Stichleitungen, Position und Anzahl der Terminationswiderstände mit einer Schwingneigung behaftet. Dies ist sehr unvorteilhaft bei der Systemauslegung, weil infolgedessen die Bitzeit so lang sein muss, bis die Schwingung ausreichend bedämpft ist. Ist die Bitzeit nicht lang genug und der Rezessivzustand damit nicht stabil, kann die Sende-/Empfangseinrichtung fälschlicherweise ein Dominant erkennen. Daher bedingt eine Einhaltung der maximal zulässigen Fehlerquote der Sende-/Empfangseinrichtung eine längere Bitzeit. Dies hat eine unerwünschte Reduzierung der Bitrate zur Folge.

Zur Lösung dieses Problems ist es möglich, nach einer detektierten Flanke vom dominanten zum rezessiven Buspegel, was der fallende Flanke eines Differenzsignals Vdiff = CAN_H - CAN_L entspricht, zeitweise einen Widerstand RRSC zwischen die zwei Bussignale CAN_H und CAN_L zu schalten und nach einer vorbestimmten Zeit wieder zu entfernen.

Problematisch ist jedoch, dass die Länge eines rezessiven Bits je nach den tatsächlich vorliegenden Systembedingungen dennoch auf einen Bruchteil der nominalen Bit-Länge schrumpfen kann. Dadurch stellt sich beispielsweise bei einem CAN Bussystem eine große Bit-Asymmetrie ein, bei welcher ein rezessives Bit deutlich kürzer als ein dominantes Bit ist.

Die EP 3 214 803 A1 offenbart eine Schaltung zur Klingelunterdrückung. Die Schaltung umfasst einen Abschlusswiderstand, der über einen Schalter mit einem Bus gekoppelt ist, und eine Steuerschaltung. Die Steuerschaltung umfasst einen Eingang, der mit einem Dateneingangspin eines Bustransceivers gekoppelt ist, und einen Ausgang, der zur Steuerung des Abschlusswiderstandes gekoppelt ist. Die Schaltung ist so konfiguriert, dass sie den Widerstand in Reaktion auf einen Übergang im Eingangsbitstrom selektiv mit dem Bus koppelt.

### Offenbarung der Erfindung

Daher ist es Aufgabe der vorliegenden Erfindung, eine Vorrichtung und ein Verfahren für eine Sende-/Empfangseinrichtung eines Bussystems bereitzustellen, welche die zuvor genannten Probleme lösen. Insbesondere sollen eine Vorrichtung und ein Verfahren für eine Sende-/Empfangseinrichtung eines Bussystems bereitgestellt werden, mit welchen eine Reduzierung einer Schwingneigung beim Übergang zwischen unterschiedlichen Bitzuständen oder Spannungszuständen, insbesondere einer Schwingneigung beim Übergang vom dominanten zum rezessiven Zustand, in einem Bussystem für alle Betriebszustände des Bussystems realisierbar ist.

Die Aufgabe wird durch eine Vorrichtung mit den Merkmalen von Anspruch 1 gelöst. Die Vorrichtung umfasst eine Messeinheit zum Messen einer minimalen rezessiven Bitzeit, die im Betrieb des Bussystems in einer Nachricht auftritt, die von der Vorrichtung von einem Bus des Bussystems empfangen wird, wobei ein Spannungszustand der Nachricht von einer Sende-/Empfangseinrichtung einer von mindestens zwei Teilnehmerstationen des Bussystems aktiv getrieben wurde, einer Berechnungseinheit zum Berechnen einer Einschaltdauer auf der Grundlage der von der Messeinheit bereitgestellten minimalen rezessiven Bitzeit, wobei die Einschaltdauer eine Zeitdauer ist, für die eine Schwingungsreduktionseinheit einzuschalten ist, die zur Reduktion von Schwingungen auf dem Bus dient, die nach einem Übergang zwischen unterschiedlichen Spannungszuständen eines Bussignals auftreten, das auf dem Bus übertragen wird, und wobei die Messeinheit ausgestaltet ist, das Messen im laufenden Betrieb des Bussystems durchzuführen, und die Berechnungseinheit ausgestaltet ist, jeweils anschließend das Berechnen im laufenden Betrieb des Bussystems durchzuführen, um die Schwingungen auf dem Bus mit dynamischer Anpassung der Einschaltdauer zu reduzieren.

Mit der beschriebenen Vorrichtung ist die Dauer eines rezessiven Bits derart messbar und auswertbar, dass Maßnahmen zur Unterdrückung der Schwingneigung gezielt einstellbar sind. Hierfür kann eine Maßnahme für ein sogenanntes Ringing Suppression oder eine Reduzierung der Schwingneigung beim Übergang des Bussignals zwischen unterschiedlichen Spannungszuständen, insbesondere von einem dominanten zu einem rezessiven Zustand, je nach Bedarf zeitlich variabel eingeleitet werden. Insbesondere ist die Einschaltdauer für die Reduzierung der Schwingneigung dynamisch an die jeweils tatsächlich herrschenden Betriebsbedingungen des Bussystems anpassbar. Derartige Betriebsbedingungen, welche die Dauer eines rezessiven Bits in dem Bussystem beeinflussen und von der Vorrichtung ausgleichbar sind, sind beispielsweise
- unterschiedliche Bitraten bei verschiedenen Übertragungsphasen im Bussystem, wie beispielsweise die verschiedenen Bitraten in der Arbitrationsphase und der Datenphase eines CAN FD Rahmens,
- der Physical Layer des CAN Busses (Transceiver bzw. Sende-Empfangseinrichtung, Bus-Topologie, Abschlusswiderstände, usw.)
- Spannung und Temperatur
- Oszillator-Toleranz eines sendenden Busteilnehmers bzw. Abweichung der Frequenz eines Taktsignals von seinem Nominalwert, wobei das Taktsignal in dem sendenden Busteilnehmer dazu verwendet wird, ein Sendesignal TX-Signal für die Sende-/Empfangseinrichtung bzw. den Sende-Transceiver zu generieren.

Dadurch kann die Vorrichtung den Empfang von Nachrichten in einer Sende-Empfangseinrichtung bzw. Transceiver einer Teilnehmerstation eines Bussystems für die jeweils im Bussystem herrschenden Betriebsbedingungen oder Verhältnisse optimieren. In Folge dessen ist eine Erhöhung der Bitraten, insbesondere im Datenbereich einer Nachricht, mit guter Empfangsqualität möglich. Als Folge davon kann die Übertragungsrate oder Übertragungsgeschwindigkeit der Nachrichten im Bussystem gegenüber einem Fall ohne Einsatz der Vorrichtung erhöht werden.

Zudem erlaubt die Vorrichtung mehr Freiheit bei der Auslegung von Bustopologien und/oder von Abschlüssen und/oder von Stubs und/oder von der Anzahl der Knoten bzw. Teilnehmerstationen des Bussystems. Insbesondere sind Änderungen an der Bustopologie mit der Vorrichtung einfach kompensierbar, ohne dass ein Baustein für die Ringing Suppression oder die Reduzierung der Schwingneigung aufgrund der Änderung der Bustopologie auszutauschen ist. Die Vorrichtung bewirkt, dass die Schwingungsreduktion nach einem Übergang des Bussignals zwischen unterschiedlichen Spannungszuständen, insbesondere von einem dominanten zu einem rezessiven Zustand, immer ideal arbeitet.

Die Vorrichtung ist für alle Sende-/Empfangseinrichtungen von Kommunikationssystemen geeignet, bei welchen ein Buszustand bzw. Spannungszustand aktiv getrieben wird, wie insbesondere bei einem CAN-Bussystem, einem CAN-HS-Bussystem, einem CAN-FD-Bussystem, usw. Bei einem CAN-HS-Bussystem (HS = Hochgeschwindigkeit = Highspeed) ist eine Datenübertragungsrate von bis zu 1000 kBit pro Sekunde (1000 kbps) möglich. Bei einem CAN FD-Bussystem ist eine Datenübertragungsrate von größer 1 MBit pro Sekunde (1 Mbps) möglich.

Vorteilhafte weitere Ausgestaltungen der Vorrichtung sind in den abhängigen Ansprüchen beschrieben.

Möglicherweise ist die Messeinheit ausgestaltet, die minimale rezessive Bitzeit kontinuierlich oder in vorbestimmten Abständen zu messen.

Gemäß einer Ausgestaltung ist die Messeinheit ausgestaltet, eine Plausibilitätsprüfung der gemessenen minimalen rezessiven Bitzeit durchzuführen.

Gemäß noch einer Ausgestaltung ist es möglich, dass die Messeinheit ausgestaltet ist, die Busauslastung zu bestimmen, um zu prüfen, ob eine gemessene minimale rezessive Bitzeit plausibel ist oder nicht.

Denkbar ist, dass die Messeinheit ausgestaltet ist, für die Berechnungseinheit eine minimale rezessive Bitzeit vorzuhalten, die abhängig davon ausgewählt ist, welche der Teilnehmerstationen eine Arbitration auf dem Bus gewonnen hat. Möglich ist zusätzlich oder alternativ, dass die Messeinheit ausgestaltet ist, einen Wert für die minimale rezessive Bitzeit für den Fall vorzuhalten, dass die Teilnehmerstation selbst sendet und einen Wert für die minimale rezessive Bitzeit für den Fall vorzuhalten, dass eine andere der Teilnehmerstation des Bussystems sendet, oder dass die Messeinheit ausgestaltet ist, für jede der Kommunikationsbeziehungen zu den Teilnehmerstationen des Bussystems eine minimale rezessive Bitzeit vorzuhalten.

Außerdem ist es zusätzlich oder alternativ möglich, dass die Messeinheit ausgestaltet ist, für jeden Identifizierer, der auf dem Bus des Bussystems gesendet wird, einen eigenen Wert für die minimale rezessive Bitzeit vorzuhalten.

Gemäß einer weiteren Ausführungsvariante kann die Messeinheit zusätzlich oder alternativ ausgestaltet sein, für mindestens zwei Kommunikationsphasen einer Nachricht eine minimale rezessive Bitzeit vorzuhalten und an die Berechnungseinheit weiterzugeben.

Die zuvor beschriebene Vorrichtung kann Teil einer Teilnehmerstation für ein Bussystem sein, die zudem eine Sende-/Empfangseinrichtung zum Senden eines Signals auf den Bus des Bussystems aufweist, wobei die Sende-/Empfangseinrichtung ausgestaltet ist, einen Zustand des Signals aktiv zu treiben, und zudem eine Schwingungsreduktionseinheit zur Reduktion von Schwingungen auf dem Bus aufweist, die nach einem Übergang zwischen unterschiedlichen Spannungszuständen eines Bussignals auftreten, das sich auf dem Bus ausbildet, wobei die Vorrichtung ausgestaltet ist, die ermittelte Zeitdauer an die Schwingungsreduktionseinheit auszugeben, so dass die Schwingungsreduktionseinheit für die ermittelte Zeitdauer eingeschaltet wird. Hierbei ist die Vorrichtung möglicherweise derart ausgestaltet, dass die Schwingungsreduktionseinheit nur aktiviert wird, wenn die Sende-/Empfangseinrichtung eine Nachricht auf den Bus sendet.

Die zuvor beschriebene Teilnehmerstation kann Teil eines Bussystems sein, das einen Bus, und mindestens zwei Teilnehmerstationen aufweist, welche über den Bus derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Reduzierung einer Schwingneigung beim Übergang zwischen unterschiedlichen Bitzuständen mit den Merkmalen von Anspruch 11 gelöst. Das Verfahren hat die Schritte: Messen, mit einer Messeinheit einer Vorrichtung für die Sende-/Empfangseinrichtung, einer minimalen rezessiven Bitzeit, die im Betrieb des Bussystems in einer Nachricht auftritt, die von der Vorrichtung von einem Bus des Bussystems empfangen wird, wobei ein Spannungszustand der Nachricht von einer Sende-/Empfangseinrichtung einer von mindestens zwei Teilnehmerstationen des Bussystems aktiv getrieben wurde, Berechnen, mit einer Berechnungseinheit der Vorrichtung, einer Einschaltdauer auf der Grundlage der von der Messeinheit bereitgestellten minimalen rezessiven Bitzeit, wobei die Einschaltdauer eine Zeitdauer ist, für die eine Schwingungsreduktionseinheit einzuschalten ist, die zur Reduktion von Schwingungen auf dem Bus dient, die nach einem Übergang zwischen unterschiedlichen Spannungszuständen eines Bussignals auftreten, das auf dem Bus übertragen wird, und wobei die Messeinheit das Messen im laufenden Betrieb des Bussystems durchführt, und die Berechnungseinheit jeweils anschließend das Berechnen im laufenden Betrieb des Bussystems durchführt, um die Schwingungen auf dem Bus mit dynamischer Anpassung der Einschaltdauer zu reduzieren.

Das Verfahren bietet dieselben Vorteile, wie sie zuvor in Bezug auf die Vorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Zeichnungen Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein vereinfachtes elektrisches Schaltbild einer Teilnehmerstation des Bussystems mit einer Vorrichtung für eine Sende-/Empfangseinrichtung gemäß dem ersten Ausführungsbeispiel;
Fig. 3 einen zeitlichen Verlauf eines differenziellen Bussignals VDIFF der Bussignale CAN_H und CAN_L bei der Sende-/Empfangseinrichtung gemäß dem ersten Ausführungsbeispiel;
Fig. 4 die zeitlichen Verhältnisse für eine Ein-/Aus-Schaltung einer Schwingungsreduktionseinheit nach einem Übergang des differenziellen Bussignals VDIFF von Fig. 3 von einem dominanten Buszustand zu einem rezessiven Buszustand mit der Vorrichtung von Fig. 2; und
Fig. 5 ein vereinfachtes elektrisches Schaltbild einer Teilnehmerstation des Bussystems mit einer Vorrichtung für eine Sende-/Empfangseinrichtung gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

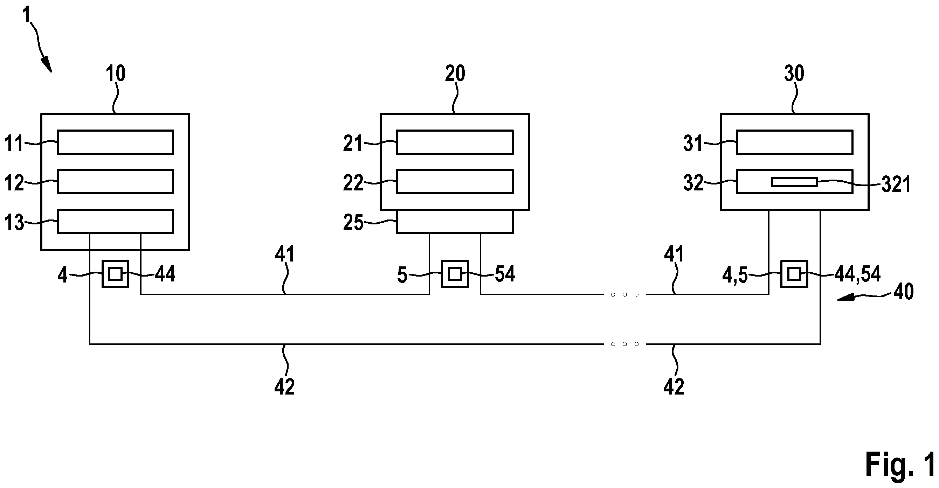

Fig. 1 zeigt ein Bussystem 1, das beispielsweise zumindest abschnittsweise ein Bussystem ist, bei dem zumindest ein Buszustand bzw. Spannungszustand aktiv getrieben wird. Ein solches Bussystem 1 ist insbesondere ein CAN-Bussystem, ein CAN-FD-Bussystem, usw., auf welches nachfolgend zur Erläuterung des Prinzips der Erfindung Bezug genommen wird. Das Bussystem 1 ist in einem Fahrzeug, insbesondere einem Kraftfahrzeug, einem Flugzeug, usw., oder im Krankenhaus usw. verwendbar. Das Bussystem 1 ist jedoch nicht darauf beschränkt. Ganz allgemein ist das Bussystem 1 ein beliebiges serielles Bussystem, bei welchem es unter realen Betriebsbedingungen zu einer Bitasymmetrie kommen kann, bei welcher sich die zeitliche Dauer eines dominanten Buszustands von der zeitlichen Dauer eines rezessiven Buszustands unterscheidet.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 werden bei einem CAN-Bussystem auch CAN_H und CAN_L genannt und dienen zur elektrischen Signalübertragung nach Einkopplung der dominanten Pegel bzw. Erzeugung von rezessiven Pegeln für ein Signal im Sendezustand. Über den Bus 40 können Nachrichten 4, 5 in der Form von Signalen zwischen den einzelnen Teilnehmerstationen 10, 20, 30 übertragen werden. Die Nachricht 4 hat einen Identifizierer 44 (in IS011898-1:2015 als CAN Identifier bezeichnet), welcher diejenige Teilnehmerstation 10 oder 20 eindeutig identifiziert, welche die Nachricht 4 versandt hat. Die Nachricht 5 hat einen Identifizierer 54, welcher diejenige Teilnehmerstation 20 oder 30 eindeutig identifiziert, welche die Nachricht 5 versandt hat. Die Teilnehmerstationen 10, 20, 30 sind beispielsweise Steuergeräte oder Anzeigevorrichtungen eines Kraftfahrzeugs.

Wie in Fig. 1 gezeigt, hat die Teilnehmerstation 10 eine Kommunikationssteuereinrichtung 11, eine Sende-/Empfangseinrichtung 12 und eine Vorrichtung 13. Dagegen hat die Teilnehmerstation 20 eine Kommunikationssteuereinrichtung 21 und eine Sende-/Empfangseinrichtung 12, wobei an die Teilnehmerstation 20 eine Vorrichtung 25 angeschlossen ist. Die Teilnehmerstation 30 hat eine Kommunikationssteuereinrichtung 31 und eine Sende-/Empfangseinrichtung 32 mit einer Vorrichtung 321.

Die Kommunikationssteuereinrichtungen 11, 21, 31 dienen zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Kommunikationssteuereinrichtung 11 kann insbesondere wie ein herkömmlicher CAN-Controller ausgeführt sein. Die Kommunikationssteuereinrichtung 21 kann insbesondere wie ein herkömmlicher CAN-FD-Controller ausgeführt sein. Die Kommunikationssteuereinrichtung 31 kann insbesondere wie ein herkömmlicher CAN-FD-Controller und/oder CAN-Controller ausgeführt sein.

Die Sende-/Empfangseinrichtungen 12, 22, 32 dienen zum Senden von Nachrichten 4 oder 5 in Form von Signalen und nutzen hierbei die jeweils zugeordnete Vorrichtung 13, 25, 321, wie nachfolgend noch ausführlicher beschrieben. Die Sende-/Empfangseinrichtung 12 kann insbesondere wie ein herkömmlicher CAN-Transceiver ausgeführt sein. Die Sende-/Empfangseinrichtung 22 kann insbesondere wie ein herkömmlicher CAN-FD-Transceiver ausgeführt sein. Die Sende-/Empfangseinrichtung 32 kann zumindest in Bezug auf ihre Funktionalität insbesondere wie ein herkömmlicher CAN-Transceiver und/oder CAN-FD-Transceiver ausgeführt sein.

Die Vorrichtungen 13, 25, 321 haben jeweils dieselbe Funktion, wie nachfolgend der Einfachheit halber als Beispiel nur für die Vorrichtung 13 beschrieben. Zudem sind die Vorrichtungen 13, 25, 321 beliebig gegeneinander austauschbar. Demzufolge sind die Vorrichtungen 13, 25, 321 nicht auf die spezielle Bauweise beschränkt, die in Fig. 1 als ein spezielles Beispiel angegeben ist.

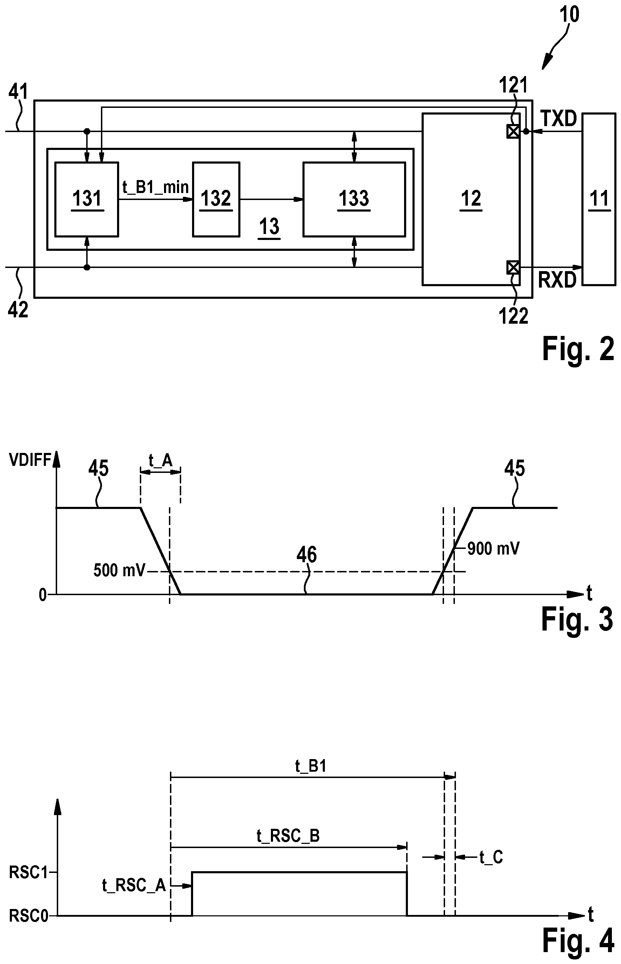

Die Vorrichtungen 13, 25, 321 und die Sende-/Empfangseinrichtungen 12, 22, 32 sind jeweils direkt an den Bus 40 angeschlossen, wie genauer in Fig. 2 für die Vorrichtung 13 dargestellt ist.

Fig. 2 zeigt den grundlegenden Aufbau der Sende-/Empfangseinrichtung 12 mit der Vorrichtung 13. Die Sende-/Empfangseinrichtung 12 und die Vorrichtung 13 sind an den Bus 40 angeschlossen, genauer gesagt dessen erste Busader 41, die bei einem CAN-Bussystem als Bussystem 1 für CAN_H dient, und dessen zweite Busader 42, die bei dem CAN-Bussystem als Bussystem 1 für CAN_L dient.

Die Sende-/Empfangseinrichtung 12 hat zudem einen Anschluss 121 für ein Sendesignal TxD, das von der Kommunikationssteuereinrichtung 11 mit einem vorbestimmten Sendetakt erzeugt wird und in die Sende-/Empfangseinrichtung 12 am Anschluss 121 eingegeben wird. Die Sende-/Empfangseinrichtung 12 setzt das Sendesignal TxD bei dem Beispiel eines CAN-Bussystems als Bussystem 1 in differentielle Signale CAN_H und CAN_L für die Busadern 41, 42 um, wie bekannt. Die differentiellen Signale CAN_H und CAN_L auf dem Bus 40 bilden ein Bussignal, das von den jeweiligen Teilnehmerstationen 10, 20, 30 empfangbar ist.

Die Sende-/Empfangseinrichtung 12 gibt das von dem Bus 40 empfangene Signal an einem Anschluss 122 an die Kommunikationssteuereinrichtung 11 als ein Empfangssignal RxD weiter.

Gemäß Fig. 2 hat die Vorrichtung 13 eine Messeinheit 131, eine Berechnungseinheit 132 und eine Schwingungsreduktionseinheit 133. Die Schwingungsreduktionseinheit 133 ist beispielsweise als Widerstand ausgeführt, der zeitweise zwischen die erste und zweite Busader 41, 42 geschaltet wird, wie zuvor beschrieben. Die Schwingungsreduktionseinheit 133 ist jedoch auf eine beliebige andere Weise ausführbar, solange mit ihr eine Bitasymmetrie des Signals auf dem Bus 40 ausgeglichen wird. Insbesondere bewirkt die Schwingungsreduktionseinheit 133 bei einem CAN-Bussystem eine Veränderung, insbesondere Verlängerung, der Bitdauer t_B1 eines rezessiven Bits, wie anhand von Fig. 3 bis Fig. 4 veranschaulicht und nachfolgend näher beschrieben ist.

Fig. 3 zeigt in Verbindung mit Fig. 4 die Wirkung der Schaltung von Fig. 2 anhand des differentiellen Bussignals, nämlich der Differenzspannung VDIFF = CAN_H - CAN_L, über der Zeit t. Bei dem Beispiel von Fig. 3 wechselt das Bussignal und damit die Differenzspannung VDIFF von einem dominanten Bit zu einem rezessiven Bit und wieder zu einem dominanten Bit bzw. von einem Bit mit einem dominanten Buszustand 45 zu einem Bit mit einem rezessiven Buszustand 46 und danach wieder zu einem Bit mit einem dominanten Buszustand 45. Somit hat das Bussignal und damit die Differenzspannung VDIFF bei dem Beispiel von Fig. 3 für die Dauer eines Bits t_B1 den rezessiven Buszustand 46. Wie aus Fig. 3 ersichtlich, benötigt die Differenzspannung VDIFF eine vorbestimmte Zeitdauer t_A, um, nach Umschaltung von einem dominanten Buszustand 45 zu einem rezessiven Buszustand 46, tatsächlich von dem dominanten Buszustand 45 zu dem rezessiven Buszustand 46 zu wechseln. Hat die Differenzspannung VDIFF einen Wert von 500 mV erreicht, was bei dem Beispiel von Fig. 3 der Empfangsschwelle der Sende-Empfangseinrichtung 12 entspricht, erkennt die Sende-Empfangseinrichtung 12 den rezessiven Buszustand 46. Hat die Differenzspannung VDIFF einen Wert von 900 mV erreicht, erkennt die Sende-Empfangseinrichtung 12 den dominanten Buszustand 45. Die Differenzspannung VDIFF benötigt eine vorbestimmte Zeitdauer t_C, um nach Umschaltung von einem rezessiven Buszustand 46 zu einem dominanten Buszustand 45 von dem genannten Wert oder der unteren Spannungsschwelle von 500 mV bis auf den genannten Wert oder die obere Spannungsschwelle von 900 mV anzusteigen, so dass die Sende-Empfangseinrichtung 12 den Wechsel von dem rezessiven Buszustand 46 zu dem dominanten Buszustand 45 erkennt.

Die Vorrichtung 13 ist mit Hilfe der Messeinheit 131 und der Berechnungseinheit 132 derart ausgestaltet, dass die Schwingungsreduktionseinheit 133 nach Ablauf einer Zeitdauer t_RSC_A eingeschaltet ist, die in Fig. 4 gezeigt ist. Die Zeitdauer t_RSC_A beginnt nach Unterschreiten der unteren Empfangsschwelle von 500 mV. Außerdem ist die Vorrichtung 13 mit Hilfe der Messeinheit 131 und der Berechnungseinheit 132 ausgestaltet, die Schwingungsreduktionseinheit 133 nach Ablauf einer Zeitdauer t_RSC_B wieder auszuschalten. Da auch die Zeitdauer t_RSC_B gemäß Fig. 4 nach Unterschreiten der unteren Empfangsschwelle von 500 mV der Sende-Empfangseinrichtung 12 beginnt, ist die Schwingungsreduktionseinheit 133 somit für eine Zeitdauer T = t_RSC_B - t_RSC_A eingeschaltet.

Die Einstellung der Zeitdauern t_RSC_A und t_RSC_B bestimmt die Vorrichtung 13 mit Hilfe der Messeinheit 131 und der Berechnungseinheit 132. Die Zeitdauer t_RSC_A ist in den meisten Fällen idealerweise 0 kann aber zur speziellen Optimierung oder aufgrund der Signallaufzeiten in der für das Bussystem 1 vorliegenden Implementierung > 0 gewählt werden. Die Zeitdauer t_RSC_B hängt von der minimalen zeitlichen Länge eines rezessiven Bits ab, die im Betrieb des Bussystems 1 auf dem Bus 40 auftritt.

Bei der Vorrichtung 13 misst die Messeinheit 131 die minimale zeitliche Länge oder Zeitdauer tBitBus(rez)_min eines rezessiven Bits, die im Betrieb des Bussystems 1 auf dem Bus 40 auftritt. Diese minimale zeitliche Länge oder Zeitdauer tBitBus(rez)_min eines rezessiven Bits auf dem Bus 40 ist nachfolgend als Zeitdauer t_B1_min bezeichnet. Die Zeitdauer t_B1_min kann bei einem speziellen Beispiel insbesondere gleich der in Fig. 3 dargestellten Zeitdauer t_B1 sein. Die Messeinheit 131 misst und bestimmt die minimale rezessive Bitzeit t_B1_min kontinuierlich oder in vorbestimmten Abständen.

Für die Bestimmung der minimalen zeitlichen Länge oder der minimalen Zeitdauer tBitBus(rez)_min eines rezessiven Bits auf dem Bus 40 bzw. der Zeitdauer t_B1_min misst die Messeinheit 131 beim Betrieb des Bussystems 1 die zeitliche Länge oder Zeitdauer aller rezessiven Sequenzen, also die jeweiligen Zeitdauern t_B1. Daraus ermittelt die Messeinheit 131 die kürzeste zeitliche Länge oder Zeitdauer eines rezessiven Bits und damit die minimale Zeitdauer t_B1_min. Bei der Ermittlung können optional verschiedene Verfahren angewendet werden, um die Messung zu plausibilisieren. Die Messeinheit 131 reicht nur plausible Werte für die Zeitdauer t_B1_min an die Berechnungseinheit 132 als nächste Einheit weiter.

Beispielsweise bestimmt die Messeinheit 131 einen Wert für die Zeitdauer t_B1_min als plausibel, wenn der Wert mehrfach gemessen worden ist. Hierbei kann in der Messeinheit 131 ein vorbestimmtes Toleranzband bestimmt sein, innerhalb welchem der Wert für die Zeitdauer t_B1_min liegen darf, um als "mehrfach gemessen" beurteilt zu werden.

Noch dazu hilft ein Vergleich mit dem letzten gültigen Wert für die Zeitdauer t_B1_min, mit großer Wahrscheinlichkeit ungültige Werte auszufiltern und damit den gemessenen Wert für die Zeitdauer t_B1_min als plausibel zu bestimmen. Das heißt explizit, dass ein zu kurzer Wert für die Zeitdauer t_B1_min als Glitch erkannt und ausgefiltert werden kann, bei welchem eine kurze, durch meist externe Störungen verursachte Umkehrung des Buspegels auftritt. Außerdem kann ein zu langer Wert für die Zeitdauer t_B1_min als gemessene Folge von zwei rezessiven Bits erkannt und ausgefiltert werden, wenn zufällig eine gewisse Zeit lang kein einzelnes rezessives Bit gesendet wird.

Zusätzlich oder alternativ kann die Messeinheit 131 einen Wert für die Zeitdauer t_B1_min als plausibel bestimmen, wenn der gemessene Wert oder Ist-Wert für die Zeitdauer t_B1_min größer oder gleich einem unteren Grenzwert für die Zeitdauer t_B1 ist. Der untere Grenzwert für die Zeitdauer t_B1_min ist aus der maximalen Bitrate bestimmbar, die in dem Bussystem 1 verwendet wird. Insbesondere kann die in dem Bussystem 1 verwendete maximale Bitrate die maximale Bitrate einer CAN FD Daten-Phase sein. Diese maximale Bitrate kann nicht beliebig hoch werden.

Der untere Grenzwert für die Zeitdauer t_B1_min hilft Glitches in stark gestörten Umgebungen eindeutig auszufiltern. Beispielsweise sind aktuell in der IS011898-2:2016 nur CAN Transceiver bzw. Sende-Empfangseinrichtungen mit bis zu 5 Mbit/s standardisiert. Eine nominale Bitzeit ist somit 200 ns lang. Bei diesem Beispiel ist insbesondere 30% der Bitzeit 0,3*200 ns = 60 ns als unterer Grenzwert für die Zeitdauer t_B1_min definierbar. In diesem Fall würde immer eine Zeitdauer t_B1_min >= 60 ns an die Berechnungseinheit 132 als die nachfolgende Einheit gemeldet werden.

Die Messeinheit 131 kann je nach Bedarf derart initialisiert werden, dass die Messeinheit 131 nach dem Einschalten initial von einem sehr kleinen, sehr großen, oder typischem Wert für t_B1_min ausgeht.

Optional ist die Messeinheit 131 derart ausgestaltet, dass sie eine Zeitdauer t_B1_min, die weitergegeben wurde, nur für eine gewisse Zeit als gültig erkennt (timeout). In diesem Fall vergrößert die Messeinheit 131 die bisherige Zeitdauer t_B1_min auf einen aktuellen gemessenen Wert, wenn für eine gewisse Zeit keine rezessive Sequenz, also die Zeitdauer t_B1, gemessen wird, die so kurz ist wie die bisherige Zeitdauer t_B1_min. Dadurch ist es möglich, den sich ändernden Randbedingungen zu folgen, die sich beispielsweise aufgrund einer Spannungsänderung und/oder Temperaturänderung und/oder Bitratenänderung und/oder der Oszillator-Toleranz, usw. ergeben.

Bei der Vorrichtung 13 kann eine der genannten Varianten für die Messung und als-plausibel-Bestimmung der Zeitdauer t_B1_min in beliebiger Kombination fest eingestellt oder vorgesehen sein. Alternativ ist eine der genannten Varianten oder Kombinationen bei der Einrichtung der Vorrichtung 13 bzw. der Teilnehmerstation 10 auswählbar und dann einstellbar.

Die Berechnungseinheit 132 berechnet aus der von der Messeinheit 131 gemessenen und weitergegebenen Zeitdauer t_B1_min den Einstellparameter bzw. die Zeitdauer t_RSC_B für die Schwingungsreduktionseinheit 133. Die Berechnung kann jeweils nach Empfang einer Zeitdauer t_B1_min erfolgen. Hierbei berücksichtigt die Berechnungseinheit 132, dass immer gilt: t_RSC_B < t_B1_min. Dadurch ist eine Sicherheitsreserve vorhanden, die verhindert, dass die Zeitdauer t_RSC_B in das nächste dominante Bit hineinragt. Hierfür kann die Berechnungseinheit 132 beispielsweise die Zeitdauer t_RSC_B berechnen als t_RSC_B = 0,7 * t_B1_min, was aus den nachfolgenden Gründen für ein CAN-Bussystem ein geeigneter Wert ist. Es sind je nach Bussystem 1 jedoch andere Faktoren als der Faktor 0,7 wählbar.

Ist das Bussystem 1 ein CAN-Bussystem, berücksichtigt die Berechnungseinheit 132, dass das CAN Protokoll am Ende eines Bits eine gewisse Zeitdauer t_CLK benötigt, um mit der Oszillator-Toleranz der "CAN clock" bzw. des CAN-Taktsignals umzugehen, welches in CAN Bussystemen vorhanden ist. Diese gewisse oder vorbestimmte Zeitdauer t_CLK ist beispielsweise 0,3 * t_B1_min. Während dieser Zeitdauer t_CLK muss die Schwingungsreduktionseinheit 133 nicht eingeschaltet sein, weil hier das Bit schon abgetastet wird und somit ein Schwingen nach dem Buszustandswechsel schon abgeklungen sein muss. Daher wurde Zeitdauer t_RSC_B bei dem vorangehenden Beispiel als t_RSC_B = 0,7 * t_B1_min berechnet.

Die Berechnungseinheit 132 gibt den berechneten Einstellparameter t_RSC_B für die Einschaltung der Schwingungsreduktionseinheit 133 an die Schwingungsreduktionseinheit 133 weiter. In Folge dessen wird die Schwingungsreduktionseinheit 133 für eine Zeitdauer eingeschaltet, die der berechneten Zeitdauer t_RSC_B entspricht, die in Fig. 4 gezeigt ist. Somit arbeitet die Schwingungsreduktionseinheit 133 immer ideal, da die Zeitdauer t_RSC_B an die aktuellen Bedingungen angepasst ist, die sich aus der tatsächlichen Bitlänge der rezessiven Bits, also der Bits mit dem Bitzustand 46, ergeben.

Bei dem beschriebenen Ausführungsbeispiel haben alle Teilnehmerstationen 10, 20, 30 die Funktionalität einer der Vorrichtungen 13, 25, 321 für die zugeordnete Sende-/Empfangseinrichtung 12, 22, 32. Alternativ ist es möglich, die Vorrichtungen 13, 25, 321 nur für Teilnehmerstationen oder Knoten des Bussystems 1 vorzusehen, die eine hohe Schwingneigung haben. Die hohe Schwingneigung der Teilnehmerstationen 10, 30 kann sich insbesondere durch deren Position im Bussystem 1, die Position der Terminationswiderstände 49, die Stub-Länge bzw. Stichleitungslänge zu den Teilnehmerstationen 10, 30, usw. ergeben.

Somit wird mit den Vorrichtungen 13, 25, 321 ein Verfahren zur Reduzierung einer Schwingneigung beim Übergang zwischen unterschiedlichen Bitzuständen durchgeführt. Zudem wird ein Verfahren ausgeführt, welches die Reduzierung einer Schwingneigung beim Übergang zwischen unterschiedlichen Bitzuständen dynamisch an die jeweils vorhandenen tatsächlichen Betriebsbedingungen des Bussystems 1 anpasst.

Gemäß einer weiteren Modifikation des ersten Ausführungsbeispiels ist die zuvor beschriebene Funktionalität mindestens einer der Vorrichtungen 13, 25, 321 nur aktiv, wenn die zugeordnete Sende-/Empfangseinrichtung 12, 22, 32 selbst sendet bzw. als Sender agiert.

Auf die zuvor beschriebenen Weisen kann eine optimierte Schwingungsreduktion nach dem Wechsel bzw. Übergang eines Bussignals bzw. des Signals VDIFF von dem dominanten Buszustand 45 zu dem rezessiven Buszustand 46 erzielt werden. Hierbei wird die Wahrscheinlichkeit stark reduziert, dass t_RSC_B in ein folgendes dominantes Bit hineinragt. Außerdem ist es durch die dynamische Anpassung der Einschaltdauer t_RSC_B nicht erforderlich, die Schwingungsreduktionseinheit 133 vorher für eine spezielle Bitrate des Bussystems 1 auszuwählen, sondern die Schwingungsreduktionseinheit 133 kann bei allen Bitraten verwendet werden. Dadurch sind weniger verschiedene Schwingungsreduktionseinheiten 133 vorzuhalten, was die Kosten für die Schwingungsreduktion durch die höhere Stückzahl für ein und denselben Baustein verringert.

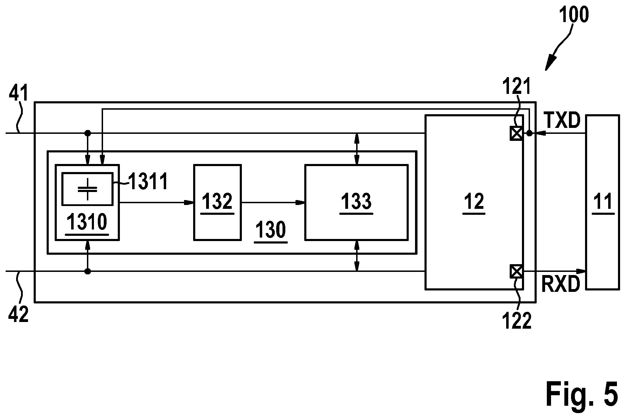

Fig. 5 zeigt eine Teilnehmerstation 100 gemäß einem zweiten Ausführungsbeispiel, die zusätzlich oder alternativ zu einer Teilnehmerstation 10 verwendet werden kann. Die Teilnehmerstation 100 hat eine Vorrichtung 130 mit einer Messeinheit 1310, die einen Kondensator als Busauslastungs-Ermittlungseinheit 1311 aufweist, um die Busauslastung auf dem Bus 40 in dem Bussystem 1 zu berücksichtigen. Dadurch kann eine noch weiter verbesserte Schwingungsreduktion nach dem Wechsel eines Bussignals von dem dominanten Buszustand 45 zu dem rezessiven Buszustand 45 erzielt werden. Das Bussystem 1 und die Vorrichtung 130 sind bis auf die nachfolgend beschriebenen Unterschiede auf die gleiche Weise aufgebaut, wie zuvor gemäß dem vorangehenden Ausführungsbeispiel oder seinen Modifikationen für das Bussystem 1 und die Vorrichtung 13 beschrieben.

Die Messeinheit 1310 ermittelt die Busauslastung durch Messen oder Abschätzen. Die Messeinheit 1310 passt dann die timeout-Zeitdauer an die Busauslastung an. Die Messung der Busauslastung könnte beispielsweise über das Verhältnis von der Dauer der gesehenen rezessiven Buszustände 45 zu der Dauer der gesehenen dominanten Buszustände 46 geschehen. Wird angenommen, dass die einzelnen Bits in einem Frame oder Rahmen bzw. einer Nachricht 4, 5 mit der gleichen Wahrscheinlichkeit 0 oder 1 annehmen können, so ist innerhalb eines Frames bzw. einer Nachricht 4, 5 im Mittel der Buspegel ausgeglichen. Das heißt, es gibt genauso viele dominante wie rezessive Buszustände 45, 46. Werden keine CAN Frames bzw. keine Nachrichten 4, 5 übertragen, ist ein rezessiver Buszustand 46 vorhanden.

Hierfür hat die Messeinheit 1310 den Kondensator als Busauslastungs-Ermittlungseinheit 1311 mit entsprechender Beschaltung, so dass ein rezessiver Buszustand 46 den Kondensator als die Busauslastungs-Ermittlungseinheit 1311 lädt und ein dominanter Buszustand 45 den Kondensator entlädt. Aus dem Ladezustand des Kondensators lässt sich dann die Busauslastung ableiten.

Gemäß einer Modifikation des zweiten Ausführungsbeispiels ist der Kondensator der Busauslastungs-Ermittlungseinheit 1311 mit der entsprechenden Beschaltung zur Ermittlung der Busauslastung extern von der Messeinheit 1310 angeordnet. In diesem Fall wird die Busauslastung mit einer anderen separaten Einheit als der Messeinheit 1310 bestimmt.

Alternativ kann der Kondensator der Busauslastungs-Ermittlungseinheit 1311 durch eine digitale Implementierung mit Hilfe eines Zählers ersetzt werden. In diesem Fall würde der Zähler der Busauslastungs-Ermittlungseinheit 1311 mit einem vorgegebenen Takt aufgrund eines rezessiven Buszustands 46 inkrementiert und aufgrund eines dominanten Buszustands 45 dekrementiert.

Gemäß einer weiteren Modifikation des zweiten Ausführungsbeispiels berücksichtigt die Messeinheit 1310 die Busauslastung, indem die Messeinheit 131 alternativ oder zusätzlich die langen rezessiven Idle-Sequenzen zwischen zwei Frames bzw. Nachrichten 4, 5 erkennt. Eine rezessive Idle-Sequenz tritt auf, wenn auf dem Bus 40 kein Signal übertragen wird und somit der rezessive Buszustand 46 vorliegt. Infolgedessen passt die Messeinheit 1310 oder die andere separate Einheit die timout Zeit an, indem die Messeinheit 1310 oder eine andere separate Einheit insbesondere den timeout während einer rezessiven Idle-Sequenz stoppt.

Gemäß einem dritten Ausführungsbeispiel berücksichtigen die Messeinheiten 131, 1310 gemäß den vorangehenden Ausführungsbeispielen die Anzahl der Teilnehmerstationen N für die Bestimmung der Zeitdauer t_B1_min und den Einstellparameter bzw. die Zeitdauer t_RSC_B für die Schwingungsreduktionseinheit 133. Das Bussystem 1 und die Vorrichtungen 13, 130 sind bis auf die nachfolgend beschriebenen Unterschiede auf die gleiche Weise aufgebaut, wie zuvor gemäß dem vorangehenden Ausführungsbeispiel oder seinen Modifikationen für das Bussystem 1 beschrieben.

Bei einer Anzahl von N Teilnehmerstationen 10, 20, 30 in dem Bussystem 1 empfängt jede der Teilnehmerstationen 10, 20, 30 ein Signal von N Teilnehmerstationen 10, 20, 30, wobei N eine natürliche Zahl ist. Bei dem Beispiel von Fig. 1 kann die Teilnehmerstationen 10 von N = 3 Teilnehmerstationen etwas empfangen, nämlich, die Teilnehmerstation 10 kann von der Teilnehmerstation 20 etwas empfangen, die Teilnehmerstation 10 kann von der Teilnehmerstation 30 etwas empfangen, und die Teilnehmerstation 10 kann ihr eigenes Sendesignal empfangen. Ganz allgemein kann eine Teilnehmerstation N von N-1 Teilnehmerstationen etwas als Empfangssignal RxD empfangen und die Teilnehmerstation N kann ihr eigenes Sendesignal TxD als Empfangssignal RxD empfangen. Bei allen diesen N Kommunikationsbeziehungen sieht die Teilnehmerstation N andere Zeitdauern t_B1 bzw. Längen von rezessiven Bits, weil der Absender jedes Mal ein anderer ist.

Daher sind die folgenden Optionen an den Messeinheiten 131, 1310 gemäß den vorangehenden Ausführungsbeispielen entweder ab Werk oder bei der Konfiguration des Bussystems 1 einstellbar. Hierbei sind auch Kombinationen der folgenden Optionen möglich.

Gemäß einer ersten Option hält die Messeinheit 131 oder 1310 zwei Werte für t_B1_min in einem Speicher vor, nämlich einen Wert t_B1_min_1 für den Fall, dass die Teilnehmerstation N selbst sendet und einen Wert t_B1_min_2 für den Fall, dass eine andere der N Teilnehmerstationen sendet. Die Werte für t_B1_min können alternativ in einem nicht dargestellten weiteren Block, insbesondere Speicher, vorgehalten werden.

Die Unterscheidung ob die Teilnehmerstation N selbst sendet oder eine andere Teilnehmerstation, kann aus dem digitalen TXD Signal abgeleitet werden. Somit gibt die Messeinheit 131 einen t_B1_min für den Wert t_RSC_B für die Berechnungseinheit 132 aus, der abhängig davon ausgewählt ist, welche der Teilnehmerstationen 10, 20, 30 bzw. N sendet, also beispielsweise die Teilnehmerstation 10 selbst oder eine der anderen Teilnehmerstationen 20, 30 des Bussystems 1.

Gemäß einer zweiten Option hält die Messeinheit 131 oder 1310 für jede der Kommunikationsbeziehungen eine Zeitdauer t_B1_min vor, also N Zeitdauern t_B1_min. Die Kommunikationsbeziehungen können mit Hilfe der Identifizierer 44, 54 einer Nachricht 4, 5 ermittelt werden, die auch Frame Identifier (Frame ID) genannt werden und die für jede Teilnehmerstation 10, 20, 30 in der gesendeten Nachricht 4, 5 individuell verwendet wird. Mit Hilfe einer Konfiguration in der Messeinheit 131 oder 1310, in der festgelegt ist, welche Teilnehmerstation 10, 20, 30 mit welchem Identifizierer 44, 54 sendet und einem CAN Protokoll-Controller wie beispielsweise die Kommunikationssteuereinrichtungen 11, 21, 31 kann immer eindeutig die Kommunikationsbeziehung identifiziert werden.

Gemäß einer dritten Option kann, falls die Messeinheit 131 oder 1310 bei der zuvor genannten zweiten Option nicht konfigurierbar ist oder der Aufwand oder die Vorhaltemöglichkeit für die Konfiguration gespart werden soll, die Messeinheit 131 oder 1310 für jeden Identifizierer 44, 54 der auf diesem Bussystems 1 gesendet wird, einen eigenen Wert für t_B1_min vorhalten. Die Anzahl der auf einem Bussystem 1 typischerweise verwendeten Identifizierer 44, 54 ist wesentlich kleiner als die Anzahl der möglichen Identifizierer 44, 54. Die Anzahl der möglichen Identifizierer 44, 54 entspricht der Zahl, die mit der Anzahl von Bits maximal codierbar ist, die für die Codierung des Identifizierers 44, 54 in der jeweiligen Nachricht 4, 5 vorgesehen ist. Somit ist dieser Ansatz zum Vorhalten nur der Anzahl der auf einem Bussystem 1 typischerweise verwendeten Identifizierer 44, 54 bereits mit einem kleinen Speicher, z.B. für 100 Werte-Paare von Identifizierern 44, 54 und Zeitdauer t_B1_min, für die meisten Anwendungsfälle ausreichend.

Gemäß einer vierten Option kann die Messeinheit 131 oder 1310 eine Zeitdauer t_B1_min_A für die Arbitrationsphase und eine Zeitdauer t_B1_min_B für die Datenphase vorhalten, in der aufgrund der höheren Bitrate kürzere Bits gesendet werden als in der Arbitrationsphase. Diese Option ist kombinierbar mit den zuvor genannten Optionen. In der Arbitrationsphase können zunächst alle Teilnehmerstation 10, 20, 30,100 gleichzeitig auf den Bus 40 senden, um auszuhandeln, welche der Teilnehmerstation 10, 20, 30,100 die wichtigste Nachricht 4, 5 zu senden hat und daher als nächstes für die Dauer des Versendens der Nachricht 4, 5 einen exklusiven, kollisionsfreien Zugriff auf den Bus 40 bekommt. Idealerweise erfolgt die Vorhaltung der Zeitdauern t_B1_min_A für die Arbitrationsphase und t_B1_min_B für die Datenphase für jede der N Kommunikationsbeziehungen. Es ist aber möglich, stattdessen nur die Vorhaltung einer Zeitdauer t_B1_min_A für die Arbitrationsphase und einer Zeitdauer t_B1_min_B für die Datenphase Die Erkennung der zwei Fälle (Arbitrationsphase und Datenphase) kann mit einem CAN Protokoll Controller erfolgen.

Dadurch kann mit dem dritten Ausführungsbeispiel eine noch weiter verbesserte Schwingungsreduktion nach dem Wechsel eines Bussignals von dem dominanten Buszustand 45 zu dem rezessiven Buszustand 45 erzielt werden.

Alle zuvor beschriebenen Ausgestaltungen der Vorrichtungen 13, 25, 321 für die Sende-/Empfangseinrichtungen 12, 22, 32 der Teilnehmerstationen 10, 20, 30, 100, des Bussystems 1 und des darin ausgeführten Verfahrens gemäß den Ausführungsbeispielen und deren Modifikationen können einzeln oder in allen möglichen Kombinationen Verwendung finden. Zusätzlich sind insbesondere folgende Modifikationen denkbar.

Das zuvor beschriebene Bussystem 1 gemäß den Ausführungsbeispielen und/oder deren Modifikationen ist anhand eines auf dem CAN-Protokoll basierenden Bussystems beschrieben. Das Bussystem 1 gemäß den Ausführungsbeispielen und/oder deren Modifikationen kann jedoch stattdessen eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30,100 auf den Bus 40 oder einen gemeinsamen Kanal des Busses 40 gewährleistet ist.

Das Bussystem 1 gemäß den Ausführungsbeispielen und/oder deren Modifikationen ist insbesondere ein CAN-Netzwerk oder ein CAN-HS-Netzwerk oder ein CAN FD-Netzwerk oder ein FlexRay-Netzwerk. Das Bussystem 1 kann jedoch alternativ ein anderes serielles Kommunikationssetzwerk sein.

Insbesondere kann die Schwingungsreduktionseinheit 15, 150 bei LVDS (Low Voltage Differential Signaling) eingesetzt werden, der ein Schnittstellen-Standard für eine Hochgeschwindigkeits-Datenübertragung ist, bei welcher ein Sender und ein Empfänger über eine Datenübertragungsstrecke miteinander verbunden sind. LVDS ist standardisiert nach ANSI/TIA/EIA-644-1995.

Die Anzahl und Anordnung der Teilnehmerstationen 10, 20, 30, 100 in dem Bussystem 1 gemäß den Ausführungsbeispielen und/oder deren Modifikationen ist beliebig. Insbesondere können nur Teilnehmerstationen 10 oder Teilnehmerstationen 20 oder Teilnehmerstationen 30 oder Teilnehmerstationen 100 in den Bussystemen 1 der Ausführungsbeispiele und/oder deren Modifikationen vorhanden sein.

Die Funktionalität der zuvor beschriebenen Ausführungsbeispiele und/oder deren Modifikationen lässt sich jeweils in einem Transceiver bzw. einer Sende-/Empfangseinrichtung 12 bzw. Transceiver oder einem CAN-Transceiver oder einem Transceiver-Chipsatz oder einem CAN-Transceiver-Chipsatz, usw. umsetzen, wie als Beispiel für die Sende-/Empfangseinrichtung 32 dargestellt. Zusätzlich oder alternativ kann die Funktionalität der zuvor beschriebenen Ausführungsbeispiele und/oder deren Modifikationen in existierende Produkte integriert werden. Insbesondere ist es möglich, dass die betrachtete Funktionalität entweder im Transceiver als separater elektronischer Baustein (Chip) realisiert ist oder in einer integrierten Gesamtlösung, bei welchem nur ein elektronischer Baustein (Chip) vorhanden ist, eingebettet ist. Möglich ist alternativ, die Vorrichtung 13, 25, 321 und eine Schwingungsreduktionseinheit 133 als komplett eigenständigen Chip auszuführen.

## Patentansprüche

1. Vorrichtung (13; 25, 321) für eine Sende-/Empfangseinrichtung (12; 22; 32) eines Bussystems (1), **gekennzeichnet durch**
eine Messeinheit (131; 1310) zum Messen einer minimalen rezessiven Bitzeit (t_B1_min), die im Betrieb des Bussystems (1) in einer Nachricht (4, 5) auftritt, die von der Vorrichtung (13; 25, 321) von einem Bus (40) des Bussystems (1) empfangen wird, wobei ein Spannungszustand (45) der Nachricht (4, 5) von einer Sende-/Empfangseinrichtung (12; 22; 32) einer von mindestens zwei Teilnehmerstationen (10, 20, 30, 100) des Bussystems (1) aktiv getrieben wurde,
eine Berechnungseinheit (132) zum Berechnen einer Einschaltdauer (t_RSC_B) auf der Grundlage der von der Messeinheit (131; 1310) bereitgestellten minimalen rezessiven Bitzeit (t_B1_min),
wobei die Einschaltdauer (t_RSC_B) eine Zeitdauer ist, für die eine Schwingungsreduktionseinheit (133) einzuschalten ist, die zur Reduktion von Schwingungen auf dem Bus (40) dient, die nach einem Übergang zwischen unterschiedlichen Spannungszuständen (45, 46) eines Bussignals (VDIFF) auftreten, das auf dem Bus (40) übertragen wird, und
wobei die Messeinheit (131; 1310) ausgestaltet ist, das Messen im laufenden Betrieb des Bussystems (1) durchzuführen, und die Berechnungseinheit (132) ausgestaltet ist, jeweils anschließend das Berechnen im laufenden Betrieb des Bussystems (1) durchzuführen, um die Schwingungen auf dem Bus (40) mit dynamischer Anpassung der Einschaltdauer (t_RSC_B) zu reduzieren.

2. Vorrichtung (13; 25, 321) nach Anspruch 1, wobei die Messeinheit (131) ausgestaltet ist, die minimale rezessive Bitzeit (t_B1_min) kontinuierlich oder in vorbestimmten Abständen zu messen.

3. Vorrichtung (13; 25, 321) nach Anspruch 1 oder 2, wobei die Messeinheit (131; 1310) ausgestaltet ist, eine Plausibilitätsprüfung der gemessenen minimalen rezessiven Bitzeit (t_B1_min) durchzuführen.

4. Vorrichtung (13; 25, 321) nach einem der vorangehenden Ansprüche, wobei die Messeinheit (1310) ausgestaltet ist, die Busauslastung zu bestimmen, um zu prüfen, ob eine gemessene minimale rezessive Bitzeit (t_B1_min) plausibel ist oder nicht.

5. Vorrichtung (13; 25, 321) nach einem der vorangehenden Ansprüche, wobei die Messeinheit (1310, 131) ausgestaltet ist, für die Berechnungseinheit (132) eine minimale rezessive Bitzeit (t_B1_min) vorzuhalten, die abhängig davon ausgewählt ist, welche der Teilnehmerstationen (10, 20, 30, 100) eine Arbitration auf dem Bus (40) gewonnen hat.

6. Vorrichtung (13; 25, 321) nach einem der vorangehenden Ansprüche,
wobei die Messeinheit (1310, 131) ausgestaltet ist, einen Wert für die minimale rezessive Bitzeit (t_B1_min) für den Fall vorzuhalten, dass die Teilnehmerstation (10, 20, 30, 100) selbst sendet und einen Wert für die minimale rezessive Bitzeit (t_B1_min) für den Fall vorzuhalten, dass eine andere der Teilnehmerstation (10, 20, 30, 100) des Bussystems (1) sendet, oder
wobei die Messeinheit (1310, 131) ausgestaltet ist, für jede der Kommunikationsbeziehungen zu den Teilnehmerstationen (10, 20, 30, 100) des Bussystems (1) eine minimale rezessive Bitzeit (t_B1_min) vorzuhalten.

7. Vorrichtung (13; 25, 321) nach einem der vorangehenden Ansprüche, wobei die Messeinheit (1310, 131) ausgestaltet ist, für jeden Identifizierer (44, 54), der auf dem Bus (40) des Bussystems (1) 1gesendet wird, einen eigenen Wert für die minimale rezessive Bitzeit (t_B1_min) vorzuhalten.

8. Vorrichtung (13; 25, 321) nach einem der vorangehenden Ansprüche, wobei die Messeinheit (1310, 131) ausgestaltet ist, für mindestens zwei Kommunikationsphasen einer Nachricht (4, 5) eine minimale rezessive Bitzeit (t_B1_min) vorzuhalten und an die Berechnungseinheit (132) weiterzugeben.

9. Teilnehmerstation (10; 30; 100) für ein Bussystem (1), mit
einer Vorrichtung (13; 321) nach einem der vorangehenden Ansprüche,
einer Sende-/Empfangseinrichtung (12; 32) zum Senden eines Signals auf den Bus (40) des Bussystems (1), wobei die Sende-/Empfangseinrichtung (12; 32) ausgestaltet ist, einen Zustand (45) des Signals aktiv zu treiben, und
einer Schwingungsreduktionseinheit (133) zur Reduktion von Schwingungen auf dem Bus (40), die nach einem Übergang zwischen unterschiedlichen Spannungszuständen (45, 46) eines Bussignals (VDIFF) auftreten, das sich auf dem Bus (40) ausbildet,
wobei die Vorrichtung (13; 321) ausgestaltet ist, die ermittelte Zeitdauer (t_RSC_B) an die Schwingungsreduktionseinheit (133) auszugeben, so dass die Schwingungsreduktionseinheit (133) für die ermittelte Zeitdauer (t_RSC_B) eingeschaltet wird.

10. Teilnehmerstation (10; 30; 100) nach Anspruch 8, wobei die Vorrichtung (13; 25, 321) derart ausgestaltet ist, dass die Schwingungsreduktionseinheit (133) nur aktiviert wird, wenn die Sende-/Empfangseinrichtung (12; 32) eine Nachricht (4; 5) auf den Bus (40) sendet.

11. Bussystem (1), mit
einem Bus (40), und
mindestens zwei Teilnehmerstationen (10; 20; 30; 100), welche über den Bus (40) derart miteinander verbunden sind, dass sie miteinander kommunizieren können,
wobei mindestens eine der mindestens zwei Teilnehmerstationen (10; 20; 30) eine Teilnehmerstation (10; 30) nach einem der Ansprüche 9 oder 10 ist.

12. Verfahren für eine Sende-/Empfangseinrichtung (12; 22; 32) eines Bussystems (1), **gekennzeichnet durch** die folgenden Schritte:
Messen, mit einer Messeinheit (131; 1310) einer Vorrichtung (13; 25, 321) für die Sende-/Empfangseinrichtung (12; 22; 32), einer minimalen rezessiven Bitzeit (t_B1_min), die im Betrieb des Bussystems (1) in einer Nachricht (4, 5) auftritt, die von der Vorrichtung (13; 25, 321) von einem Bus (40) des Bussystems (1) empfangen wird, wobei ein Spannungszustand (45) der Nachricht (4, 5) von einer Sende-/Empfangseinrichtung (12; 22; 32) einer von mindestens zwei Teilnehmerstationen (10, 20, 30, 100) des Bussystems (1) aktiv getrieben wurde,
Berechnen, mit einer Berechnungseinheit (132) der Vorrichtung (13; 25, 321), einer Einschaltdauer (t_RSC_B) auf der Grundlage der von der Messeinheit (131; 1310) bereitgestellten minimalen rezessiven Bitzeit (t_B1_min),
wobei die Einschaltdauer (t_RSC_B) eine Zeitdauer ist, für die eine Schwingungsreduktionseinheit (133) einzuschalten ist, die zur Reduktion von Schwingungen auf dem Bus (40) dient, die nach einem Übergang zwischen unterschiedlichen Spannungszuständen (45, 46) eines Bussignals (VDIFF) auftreten, das auf dem Bus (40) übertragen wird, und
wobei die Messeinheit (131; 1310) das Messen im laufenden Betrieb des Bussystems (1) durchführt, und die Berechnungseinheit (132) jeweils anschließend das Berechnen im laufenden Betrieb des Bussystems (1) durchführt, um die Schwingungen auf dem Bus (40) mit dynamischer Anpassung der Einschaltdauer (t_RSC_B) zu reduzieren.

## Claims

1. Apparatus (13; 25, 321) for a transmission/reception device (12; 22; 32) of a bus system (1), **characterized by**
a measuring unit (131; 1310) for measuring a minimum recessive bit time (t_B1_min) that occurs during operation of the bus system (1) in a message (4, 5) that the apparatus (13; 25, 321) receives from a bus (40) of the bus system (1), a voltage state (45) of the message (4, 5) having been actively driven by a transmission/reception device (12; 22; 32) of one of at least two subscriber stations (10, 20, 30, 100) of the bus system (1),
a computation unit (132) for computing a switched-on time (t_RSC_B) on the basis of the minimum recessive bit time (t_B1_min) provided by the measuring unit (131; 1310),
wherein the switched-on time (t_RSC_B) is a period of time for which an oscillation reduction unit (133) needs to be switched on, said oscillation reduction unit being used to reduce oscillations on the bus (40) that occur after a transition between different voltage states (45, 46) of a bus signal (VDIFF) transmitted on the bus (40), and
wherein the measuring unit (131; 1310) is configured to perform the measuring during ongoing operation of the bus system (1), and the computation unit (132) is configured to in each case subsequently perform the computing during ongoing operation of the bus system (1), in order to reduce the oscillations on the bus (40) with dynamic adaptation of the switched-on time (t_RSC_B).

2. Apparatus (13; 25, 321) according to Claim 1, wherein the measuring unit (131) is configured to measure the minimum recessive bit time (t_B1_min) continuously or at predetermined intervals.

3. Apparatus (13; 25, 321) according to Claim 1 or 2, wherein the measuring unit (131; 1310) is configured to perform a plausibility check for the measured minimum recessive bit time (t_B1_min).

4. Apparatus (13; 25, 321) according to one of the preceding claims, wherein the measuring unit (1310) is configured to determine the bus workload in order to check whether or not a measured minimum recessive bit time (t_B1_min) is plausible.

5. Apparatus (13; 25, 321) according to one of the preceding claims, wherein the measuring unit (1310, 131) is configured to keep for the computation unit (132) a minimum recessive bit time (t_B1_min) selected on the basis of which of the subscriber stations (10, 20, 30, 100) has won an arbitration on the bus (40).

6. Apparatus (13; 25, 321) according to one of the preceding claims,
wherein the measuring unit (1310, 131) is configured to keep a value for the minimum recessive bit time (t_B1_min) for the case in which the subscriber station (10, 20, 30, 100) itself transmits and to keep a value for the minimum recessive bit time (t_B1_min) for the case in which another of the subscriber stations (10, 20, 30, 100) of the bus system (1) transmits, or wherein the measuring unit (1310, 131) is configured to keep a minimum recessive bit time (t_B1_min) for each of the communication relationships with the subscriber stations (10, 20, 30, 100) of the bus system (1).

7. Apparatus (13; 25, 321) according to one of the preceding claims, wherein the measuring unit (1310, 131) is configured to keep a separate value for the minimum recessive bit time (t_B1_min) for each identifier (44, 54) transmitted on the bus (40) of the bus system (1).

8. Apparatus (13; 25, 321) according to one of the preceding claims, wherein the measuring unit (1310, 131) is configured to keep a minimum recessive bit time (t_B1_min) for at least two communication phases of a message (4, 5) and to forward said minimum recessive bit time to the computation unit (132).

9. Subscriber station (10; 30; 100) for a bus system (1), having
an apparatus (13; 321) according to one of the preceding claims,
a transmission/reception device (12; 32) for transmitting a signal to the bus (40) of the bus system (1), wherein the transmission/reception device (12; 32) is configured to actively drive a state (45) of the signal, and
an oscillation reduction unit (133) for reducing oscillations on the bus (40) that occur after a transition between different voltage states (45, 46) of a bus signal (VDIFF) that forms on the bus (40), wherein the apparatus (13; 321) is configured to output the ascertained period of time (t_RSC_B) to the oscillation reduction unit (133), with the result that the oscillation reduction unit (133) is switched on for the ascertained period of time (t_RSC_B).

10. Subscriber station (10; 30; 100) according to Claim 8, wherein the apparatus (13; 25, 321) is configured such that the oscillation reduction unit (133) is activated only if the transmission/reception device (12; 32) transmits a message (4; 5) to the bus (40) .

11. Bus system (1), having
a bus (40), and
at least two subscriber stations (10; 20; 30; 100) connected to one another via the bus (40) such that they can communicate with one another,
wherein at least one of the at least two subscriber stations (10; 20; 30) is a subscriber station (10; 30) according to either of Claims 9 and 10.

12. Method for a transmission/reception device (12; 22; 32) of a bus system (1), **characterized by** the following steps:
measuring, using a measuring unit (131; 1310) of an apparatus (13; 25, 321) for the transmission/reception device (12; 22; 32), a minimum recessive bit time (t_B1_min) that occurs during operation of the bus system (1) in a message (4, 5) that the apparatus (13; 25, 321) receives from a bus (40) of the bus system (1), a voltage state (45) of the message (4, 5) having been actively driven by a transmission/reception device (12; 22; 32) of one of at least two subscriber stations (10, 20, 30, 100) of the bus system (1),
computing, using a computation unit (132) of the apparatus (13; 25, 321), a switched-on time (t_RSC_B) on the basis of the minimum recessive bit time (t_B1_min) provided by the measuring unit (131; 1310), wherein the switched-on time (t_RSC_B) is a period of time for which an oscillation reduction unit (133) needs to be switched on, said oscillation reduction unit being used to reduce oscillations on the bus (40) that occur after a transition between different voltage states (45, 46) of a bus signal (VDIFF) transmitted on the bus (40), and
wherein the measuring unit (131; 1310) performs the measuring during ongoing operation of the bus system (1), and the computation unit (132) in each case subsequently performs the computing during ongoing operation of the bus system (1), in order to reduce the oscillations on the bus (40) with dynamic adaptation of the switched-on time (t_RSC_B).

## Revendications

1. Dispositif (13 ; 25, 321) destiné à un équipement émetteur/récepteur (12 ; 22 ; 32) d'un système de bus (1), **caractérisé par**
une unité de mesure (131 ; 1310) destinée à mesurer un temps de bits récessifs minimal (t_B1_min) qui survient pendant le fonctionnement du système de bus (1) dans un message (4, 5) qui est reçu par le dispositif (13 ; 25, 321) à partir d'un bus (40) du système de bus (1), un état de tension (45) du message (4, 5) ayant été rendu actif par un équipement émetteur/récepteur (12 ; 22 ; 32) d'une parmi au moins deux stations d'abonné (10, 20, 30, 100) du système de bus (1),
une unité de calcul (132) destinée à calculer une durée de mise en circuit (t_RSC_B) sur la base du temps de bits récessifs minimal (t_B1_min) fourni par l'unité de mesure (131 ; 1310),
la durée de mise en circuit (t_RSC_B) étant une durée pendant laquelle une unité de réduction d'oscillation (133) doit être mise en circuit et qui sert à réduire des oscillations sur le bus (40) qui surviennent après une transition entre différents états de tension (45, 46) d'un signal de bus (VDIFF) qui est transmis sur le bus (40), et
l'unité de mesure (131 ; 1310) étant configurée pour effectuer la mesure en cours de fonctionnement du système de bus (1), et l'unité de calcul (132) étant configurée pour effectuer respectivement ensuite le calcul en cours de fonctionnement du système de bus (1) afin de réduire les oscillations sur le bus (40) avec une adaptation dynamique de la durée de mise en circuit (t_RSC_B).

2. Dispositif (13 ; 25, 321) selon la revendication 1, dans lequel l'unité de mesure (131) est configurée pour mesurer le temps de bits récessifs minimal (t_B1_min) en continu ou à intervalles prédéterminés.

3. Dispositif (13 ; 25, 321) selon la revendication 1 ou 2, dans lequel l'unité de mesure (131 ; 1310) est configurée pour effectuer un contrôle de plausibilité du temps de bits récessifs minimal (t_B1_min) mesuré.

4. Dispositif (13 ; 25, 321) selon l'une quelconque des revendications précédentes, dans lequel l'unité de mesure (1310) est configurée pour déterminer la charge du bus afin de vérifier si un temps de bits récessifs minimal (t_B1_min) mesuré est plausible ou non.

5. Dispositif (13 ; 25, 321) selon l'une quelconque des revendications précédentes, dans lequel l'unité de mesure (1310, 131) est configurée pour tenir à disposition de l'unité de calcul (132) un temps de bits récessifs minimal (t_B1_min) qui est sélectionné en fonction de celle des stations d'abonné (10, 20, 30, 100) qui a remporté un arbitrage sur le bus (40).

6. Dispositif (13 ; 25, 321) selon l'une quelconque des revendications précédentes,
l'unité de mesure (1310, 131) étant configurée pour tenir à disposition une valeur pour le temps de bits récessifs minimal (t_B1_min) au cas où la station d'abonné (10, 20, 30, 100) émettrait elle-même et une valeur pour le temps de bits récessifs minimal (t_B1_min) au cas où une autre des stations d'abonné (10, 20, 30, 100) du système de bus (1) émettrait, ou l'unité de mesure (1310, 131) étant configurée pour tenir à disposition pour chacune des relations de communication avec les stations d'abonné (10, 20, 30, 100) du système de bus (1) un temps de bits récessifs minimal (t_B1_min).

7. Dispositif (13 ; 25, 321) selon l'une quelconque des revendications précédentes, dans lequel l'unité de mesure (1310, 131) est configurée pour tenir à disposition pour chaque identifiant (44, 54) qui est émis sur le bus (40) du système de bus (1) une valeur propre pour le temps de bits récessifs minimal (t_B1_min).

8. Dispositif (13 ; 25, 321) selon l'une quelconque des revendications précédentes, dans lequel l'unité de mesure (1310, 131) est configurée pour tenir à disposition un temps de bits récessifs minimal (t_B1_min) pour au moins deux phases de communication d'un message (4, 5) et pour le retransmettre à l'unité de calcul (132).

9. Station d'abonné (10 ; 30 ; 100) pour un système de bus (1), comprenant
un dispositif (13 ; 321) selon l'une quelconque des revendications précédentes,
un équipement émetteur/récepteur (12 ; 32) destiné à émettre un signal sur le bus (40) du système de bus (1), l'équipement émetteur/récepteur (12 ; 32) étant configuré pour rendre actif un état (45) du signal, et une unité de réduction d'oscillation (133) destinée à réduire des oscillations sur le bus (40) qui surviennent après une transition entre différents états de tension (45, 46) d'un signal de bus (VDIFF) qui se forme sur le bus (40),
le dispositif (13 ; 321) étant configuré pour délivrer la durée établie (t_RSC_B) à l'unité de réduction d'oscillation (133) de sorte que l'unité de réduction d'oscillation (133) est mise en circuit pendant la durée établie (t_RSC_B).

10. Station d'abonné (10 ; 30 ; 100) selon la revendication 8, dans laquelle le dispositif (13 ; 25, 321) est configuré de telle sorte que l'unité de réduction d'oscillation (133) n'est activée que si l'équipement émetteur/récepteur (12 ; 32) émet un message (4 ; 5) sur le bus (40).

11. Système de bus (1), comprenant
un bus (40), et
au moins deux stations d'abonné (10 ; 20 ; 30 ; 100) qui sont reliées l'une à l'autre par le bus (40) de telle sorte qu'elles peuvent communiquer l'une avec l'autre,
au moins l'une des au moins deux stations d'abonné (10 ; 20 ; 30) étant une station d'abonné (10 ; 30) selon l'une quelconque des revendications 9 ou 10.

12. Procédé destiné à un équipement émetteur/récepteur (12 ; 22 ; 32) d'un système de bus (1), **caractérisé par** les étapes suivantes consistant à :
mesurer, par une unité de mesure (131 ; 1310) d'un dispositif (13 ; 25, 321) destiné à l'équipement émetteur/récepteur (12 ; 22 ; 32) un temps de bits récessifs minimal (t_B1_min) qui survient pendant le fonctionnement du système de bus (1) dans un message (4, 5) qui est reçu par le dispositif (13 ; 25, 321) à partir d'un bus (40) du système de bus (1), un état de tension (45) du message (4, 5) ayant été rendu actif par un équipement émetteur/récepteur (12 ; 22 ; 32) d'une parmi au moins deux stations d'abonné (10, 20, 30, 100) du système de bus (1),
calculer, par une unité de calcul (132) du dispositif (13 ; 25, 321), une durée de mise en circuit (t_RSC_B) sur la base du temps de bits récessifs minimal (t_B1_min) fourni par l'unité de mesure (131 ; 1310), la durée de mise en circuit (t_RSC_B) étant une durée pendant laquelle une unité de réduction d'oscillation (133) doit être mise en circuit et qui sert à réduire des oscillations sur le bus (40) qui surviennent après une transition entre différents états de tension (45, 46) d'un signal de bus (VDIFF) qui est transmis sur le bus (40), et
l'unité de mesure (131 ; 1310) effectuant la mesure en cours de fonctionnement du système de bus (1), et
l'unité de calcul (132) effectuant respectivement ensuite le calcul en cours de fonctionnement du système de bus (1) afin de réduire les oscillations sur le bus (40) avec une adaptation dynamique de la durée de mise en circuit (t_RSC_B).
